# DEMANDE DE BREVET EUROPEEN

(11) **EP 2 416 468 A2**
(43) Date de publication de la demande: **08.02.2012**
(21) Numéro de dépôt: 11175959.3
(22) Date de dépôt: 29.07.2011
(51) Int. Cl.: H02J 7/00, H01M 10/44

(54) **Procédé d'équilibrage pour batterie électrique et système de gestion pour batterie mettant en ouvre un tel procédé**

(30) Priorité: 05.08.2010 FR 1056474
(71) Demandeur: E4V, 92200 Neuilly/Seine (FR)
(72) Inventeur: Bossard, Olivier, 33610 CANEJAN (FR); Favot, Adrien, 33127 MARTIGNAS SUR JALLES (FR)
(74) Mandataire: Coquel, Jean-Marc

(57) **Abrégé**

L'invention concerne également un système (13) de gestion pour batterie comportant des moyens pour mettre en oeuvre un procédé d'équilibrage pour batteries (10) d'accumulateurs électriques composées modulairement à l'aide d'éléments (12) rechargeables interconnectés en série. Ledit système est apte à activer un circuit d'équilibrage (11) passif par l'intermédiaire d'une mise en circuit des branches (14) de dérivation individuelles montées en parallèle de chaque élément rechargeable (12), lorsque lesdits éléments présentent de faibles déséquilibres. Il est en outre également apte à activer un circuit d'équilibrage actif individuel, par l'intermédiaire d'une commutation d'un circuit (18) de commutation destiné à interconnecter un des éléments rechargeables (12) du pack à un dispositif d'alimentation (20) dont l'énergie est utilisée pour réaliser un équilibrage individuel dudit élément présentant un fort déséquilibre de charge.

## Description

### Domaine de l'invention

La présente invention a pour objet un procédé d'équilibrage pour batterie d'accumulateurs électriques composée modulairement à l'aide d'éléments rechargeables interconnectés en série.

L'invention concerne également un système de gestion pour batterie destiné à être incorporé dans un agencement de recharge et d'équilibrage de batteries pour permettre l'exploitation du procédé évoqué.

### Etat de la technique

Les batteries d'accumulateurs sont utilisées dans de nombreux appareils électriques et électroniques et, notamment, dans les véhicules électriques pour alimenter le ou les moteurs électriques de propulsion ou de traction du véhicule.

Le pack de batteries est un ensemble mécanique intégrant des cellules unitaires de stockage. Ces cellules sont assemblées en série, de sorte à obtenir une tension et une capacité souhaitées.

Actuellement, le pack de batteries est contrôlé par une carte électronique plus connue sous le nom de BMS pour Battery Monitoring System en anglais. Cette carte permet de contrôler l'ensemble des paramètres de chaque cellule du pack en fonction de mesures effectuées par des capteurs de courant, de tension, d'isolement électrique et de température, de manière à maintenir la batterie dans le meilleur état de fonctionnement possible, eu égard aux contraintes de fonctionnement de l'appareil électrique, tel qu'un véhicule électrique, dont elle est la source d'énergie.

Les éléments en série d'une batterie sont le plus généralement traversés par un même courant, de charge ou de décharge. Toutefois l'équilibrage d'une batterie requiert qu'à certains moments les courants traversant ses divers éléments puissent être différents.

Il est connu de décharger, à des fins d'équilibrage, une cellule d'un pack de batteries, au moyen d'un dispositif de dérivation individuel, qui vient se connecter en parallèle à elle, lorsque ladite cellule se trouve être trop chargée. Ce dispositif de dérivation inclut par exemple une résistance exploitée à des fins de dissipation d'énergie. Un courant de dérivation ou "by-pass" circule alors au travers du dispositif et permet de réduire, voire de dériver totalement, le courant circulant dans la cellule.

La capacité d'équilibrage Q pour une cellule est proportionnelle au courant de dérivation l et à la durée pendant laquelle cette dérivation est réalisée. Il est donc possible d'obtenir un même équilibrage au niveau d'une cellule avec un courant de dérivation faible maintenu pendant un temps long ou avec un courant de dérivation important établi pendant un temps relativement court.

Cette technique couramment utilisée, peu couteuse du fait que seuls des composants passifs sont utilisés, permet un équilibrage quasi-simultané de toutes les cellules.

Toutefois, les dispositifs de dérivation ont pour inconvénient de dissiper de l'énergie, donc de chauffer le pack de batteries. Ce type de technique d'équilibrage passif est inadapté pour de forts déséquilibres de charges entre les cellules. En effet dans ce cas, l'équilibrage ne pourra être obtenu qu'après une durée d'équilibrage très longue ou qu'avec un courant de dérivation très important, augmentant de ce fait l'échauffement du pack de batteries pouvant entraîner sa destruction.

Ce type de technique d'équilibrage passif est également inadapté lorsque le nombre de cellules à équilibrer est peu important.

Il est connu une technique d'équilibrage actif générant moins d'échauffement avec un courant de dérivation important établi pendant un temps relativement court. Cette technique consiste à apporter de l'énergie à chaque cellule du pack moins chargée. Toutefois, cette technique s'avère très onéreuse, en cas d'équilibrage simultané des cellules. En effet, il faudra autant de composants électriques actifs que de cellules à contrôler. En outre, il faudra une unité de traitement pour gérer le fonctionnement de ces composants actifs et déclencher l'équilibrage simultané des cellules.

La réalisation d'une telle technique d'équilibrage actif demande ainsi la mise en oeuvre de technologies onéreuses, du fait de spécifications exigeantes. Cette technologie onéreuse augmente le coût global dudit pack de batteries.

Ainsi, il existe aujourd'hui un besoin de trouver un moyen économique, fiable et simple utilisant la technique d'équilibrage actif tout en permettant un équilibrage simultané des cellules.

### Exposé de l'invention

L'invention a justement pour but de répondre à ce besoin tout en remédiant aux inconvénients des techniques exposées précédemment. Pour cela, l'invention propose une solution d'équilibrage simultanée mise en oeuvre par un circuit d'équilibrage passif, lorsqu'une des cellules présente de faibles déséquilibres. Ce circuit d'équilibrage simultané comporte une branche de dérivation individuelle connectée en parallèle à chaque cellule du pack de batterie. Ces branches de dérivation sont contrôlées par le BMS. L'échauffement du pack généré par cette solution est négligeable du fait que les branches de dérivation ne sont mises en circuit par le BMS que pour de faibles déséquilibres nécessitant une durée d'équilibrage relativement courte de l'ordre, par exemple, de quelques minutes.

L'invention propose également une solution d'équilibrage individuel mise en oeuvre, en complément de la solution d'équilibrage passif, lorsqu'une des cellules, moins chargée, présente un fort déséquilibre par rapport aux autres cellules.

Cette solution d'équilibrage individuel est mise en oeuvre par un circuit d'équilibrage actif. Ce circuit d'équilibrage est relié à une batterie, dont l'énergie est utilisée pour réaliser un équilibrage actif, par l'intermédiaire d'un convertisseur, d'un premier courant électrique continu en un second courant continu (DC/DC). Ce convertisseur est également apte à assurer une isolation galvanique entre les cellules du pack de batteries à une masse de l'appareil électrique alimenté par ce pack. Le circuit d'équilibrage comporte une matrice de commutation destinée à connecter le convertisseur à une cellule du pack. Le fonctionnement de ce circuit d'équilibrage est contrôlé par le BMS.

Cette solution permet de pouvoir équilibrer une cellule avec des courants de dérivation très importants, donc un équilibrage plus rapide, tout en générant moins d'échauffement.

Plus précisément, l'invention a pour objet un système de gestion pour batterie destiné à contrôler un pack de batteries alimentant un appareil électrique, ledit pack comportant un ensemble de cellules montées en série, chaque cellule comportant au moins un élément rechargeable, ladite batterie étant alimentée par une source d'alimentation.

Selon l'invention, ce système de gestion comporte :
- des moyens d'activation d'un circuit d'équilibrage passif par l'intermédiaire d'une mise en circuit des branches de dérivation individuelles montées en parallèle de chaque élément rechargeable, lorsque la tension mesurée aux bornes d'un des éléments est différente d'une tension d'équilibrage prédéfinie,
- des moyens d'activation d'un circuit d'équilibrage actif par l'intermédiaire d'une commutation d'un circuit de commutation destiné à interconnecter un des éléments rechargeables du pack à un dispositif d'alimentation distinct de ladite source d'alimentation et dont l'énergie est utilisée pour réaliser un équilibrage individuel dudit élément, la cellule correspondante dudit élément rechargeable restant montée en série avec les autres cellules dudit pack de sorte que le circuit de puissance ne soit pas coupé, ledit circuit de commutation étant activé lorsque la tension aux bornes dudit élément rechargeable n'a pas atteint une valeur déterminée d'un seuil V1 minimal.

L'invention a également pour objet un procédé d'équilibrage pour batterie électrique dans lequel :
- on mesure une tension aux bornes de chacun des éléments rechargeables d'un pack de batteries, ces éléments rechargeables étant montés en série,
- on compare la tension mesurée à une tension d'équilibrage prédéfinie,
- lorsque la tension mesurée aux bornes d'un des éléments rechargeables est différente de la tension d'équilibrage alors on déclenche un équilibrage simultané de l'ensemble des éléments du pack, en activant les branches de dérivation individuelles montées en parallèle de chaque élément rechargeable, lesdites branches de dérivation étant aptes à dériver au moins une partie du courant circulant sur lesdits éléments.
- si à l'issue d'une durée prédéfinie, la tension mesurée aux bornes dudit élément n'a pas atteint une valeur déterminée de seuil V1 minimal, alors on déclenche un équilibrage individuel actif de cet élément en activant un circuit de commutation, ledit circuit de commutation étant destiné à interconnecter ledit élément rechargeable à un dispositif d'alimentation dont l'énergie est utilisée pour réaliser l'équilibrage dudit élément, ledit élément rechargeable restant monté en série avec les autres éléments rechargeables du pack de sorte que le circuit de puissance ne soit pas coupé.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une revendication schématique d'un pack de batterie contrôlé par BMS, selon un mode de réalisation de l'invention.
La figure 2 montre une illustration de moyens mettant en oeuvre un mode de réalisation du procédé d'équilibrage de l'invention.

### Description détaillée de modes de réalisation de l'invention

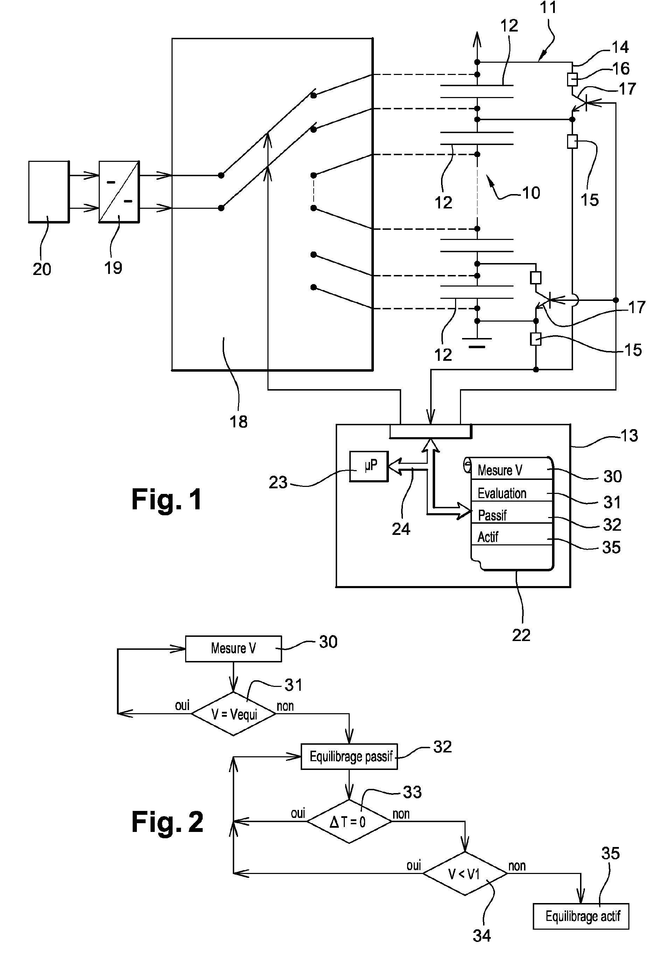

Le schéma proposé sur la figure 1 montre un agencement permettant l'équilibrage d'un pack 10 de batteries électriques. Le pack 10 de batteries est par exemple une batterie d'alimentation équipant un véhicule automobile disposant d'équipements électriques et, le cas échéant, d'un moteur électrique de propulsion. Le pack 10 peut également alimenter un réseau téléphonique, un réseau informatique, ou toute autre installation dont la source d'énergie est électrique.

Le pack 10 est composé de manière modulaire et constitue un ensemble regroupant une suite de cellules montées en série. Chaque cellule est constituée par au moins un élément rechargeable 12. Pour des raisons de simplification de l'exposé, il n'est fait état que d'un seul élément rechargeable par cellule dans le reste de la demande, étant entendu que l'invention peut éventuellement être mise en oeuvre avec des cellules à plusieurs éléments.

Le pack 10, qui est représenté à la figure 1, comporte quatre éléments rechargeables 12 disposés en série, ces éléments sont par exemple des éléments de type Lithium-lon.

Le pack 10 de batteries est surveillé et géré par un système 13 de gestion pour batterie. Ce type de système 13, plus connu sous son nom anglais de BMS, est en lui-même bien connu de l'homme du métier.

Il est prévu que chaque élément 12 soit équipé d'un circuit 11 d'équilibrage passif monté en parallèle à lui. Chaque circuit 11 d'équilibrage passif permet de dériver au moins une partie du courant qui est fourni au pack 10 par une source (non représentée) et qui circule dans l'élément 12 correspondant, lorsque la tension mesurée aux bornes de cet élément s'élève au-dessus d'une valeur déterminée de seuil V2 maximal d'activation de l'équilibrage.

La source alimentant le pack 10 peut être un réseau électrique de distribution ou un générateur électrique indépendant. Ce générateur est éventuellement un générateur monté dans un véhicule.

Chaque circuit 11 d'équilibrage passif est contrôlé par le BMS 13. Pour ce faire, un montage 15 de mesure de tension est affecté à chaque élément 12 aux bornes auxquelles il est relié, via une résistance de mesure qui est connectée à la borne négative de cet élément. Ce montage 15 fournit au BMS 13 le résultat de la mesure. En fonction de cette mesure le BMS 13 commande la mise en circuit d'une branche 14 de dérivation du circuit 11 d'équilibrage passif. Cette branche 14 de dérivation comporte une résistance 16 et un transistor 17. Cette branche 14 de dérivation est montée en série avec la résistance de mesure, entre les bornes de l'élément 12 auxquelles le montage 15 est affecté.

Le pack 10 est connecté à un circuit 21 d'équilibrage actif. Ce circuit 21 d'équilibrage actif comprend un circuit 18 de commutation et un convertisseur 19. Ce circuit 18 de commutation assure l'interconnexion entre le convertisseur 19 et un élément 12 rechargeable. Le fonctionnement du circuit 18 de commutation est contrôlé par le BMS 13. Le circuit 21 d'équilibrage actif permet de charger un élément 12 présentant un fort déséquilibre par l'intermédiaire du dispositif 20 d'alimentation, lorsque la tension mesurée aux bornes de cet élément n'a pas atteint une valeur déterminée de seuil V1 minimal et ne s'élève pas au-dessus de la valeur déterminée de seuil V2 maximal.

La valeur des tensions seuils V1 et V2 ainsi que de la tension d'équilibrage d'un pack de batteries donné dépendent de la technologie de réalisation dudit pack. Dans un exemple, la tension seuil V1 est de l'ordre de 3.4 volts et celle de V2 de l'ordre de 3.7 volts, pour des technologies de batteries de type LiFeP04.

Le convertisseur 19 est un convertisseur de tension continue DC/DC, qui permet d'alimenter les éléments 12 rechargeables à partir d'une tension continue constante délivrée par un dispositif 20 d'alimentation. Le dispositif 20 d'alimentation est distinct de la source alimentant le pack 10. Le dispositif 20 peut être une batterie accessoire présente sur les véhicules.

Le convertisseur 19 est isolé galvaniquement de la masse du véhicule de sorte à générer une tension de sortie isolée de la tension sur son entrée. Ce convertisseur 19 permet ainsi d'éviter une connexion des éléments 12 à la masse du véhicule. Le dimensionnement du convertisseur 19 dépend du courant maximum à fournir aux éléments 12 rechargeables. Le convertisseur 19 fournit en sortie une tension quasi identique à celle de l'élément 12.

Pour contrôler le fonctionnement d'une part des branches 14 de dérivation et d'autre part du circuit 18 de commande, le BMS 13 comporte, entre autres, une mémoire programme 22 connectée à un microprocesseur 23 via un bus de communication 24. Le BMS 13 comporte une interface d'entrée qui transforme les valeurs analogiques mesurées fournies par le montage 15 de mesure en des valeurs numériques qui peuvent être traitées par ledit microprocesseur. Le BMS 13 comporte également une interface de sortie destinée à transformer les données numériques fournies par ledit microprocesseur en des signaux électriques de commandes à destination des branches 14 de dérivation et du circuit 18 de commutation.

Les actions menées par le BMS 13, sont ordonnées par le microprocesseur 23. Le microprocesseur 23 produit, en réponse aux codes instructions enregistrés dans la mémoire programme 22 des ordres destinés au dispositif 14 de dérivation et au circuit 18 de commutation. La mémoire programme comporte à cet effet plusieurs zones de programme 30 à 34, correspondant respectivement à une suite d'étapes.

La figure 2 est un exemple de diagramme fonctionnel d'un mode de réalisation du procédé de l'invention. Un programme général comportant tous les sous-programmes 30 à 35 organise la succession de ces étapes selon le mode suivant. Ce diagramme montre une étape préliminaire 30 dans laquelle le BMS 13 reçoit la tension v mesurée pour chaque élément 12 rechargeable.

Le BMS 13 évalue la tension V mesurée et la compare, à une étape 31, à un seuil d'équilibrage prédéfini. Tant que la tension V mesurée équivaut à la tension d'équilibrage du pack de batterie aucune procédure d'équilibrage n'est déclenchée par le BMS 13.

Lorsque la tension V mesurée aux bornes de cet élément 12 est différent de la tension d'équilibrage le BMS exécute l'étape 33 de commande d'une phase d'équilibrage simultané passif de l'ensemble des cellules. Durant cette phase d'équilibrage simultané, le BMS 13 active le circuit 11 d'équilibrage passif en commandant la mise en circuit des transistors 17 des branches 14 de dérivation de manière à ce qu'il dérive une partie du courant des éléments 12 correspondants.

Dès que la phase d'équilibrage simultané est activée, le BMS 13 lance, à une étape 33, un compteur à rebours, dont la durée est par exemple de l'ordre de quelques minutes, temps pendant lequel il vérifie si la tension V mesurée équivaut à la tension d'équilibrage.

La durée du compteur à rebours est déterminée de sorte à minimiser les effets secondaires de l'équilibrage passif, qui sont principalement la dissipation de la chaleur dans le pack de batteries. Dans un mode de réalisation cette durée est de l'ordre de 30 minutes.

Si à l'issue du compteur à rebours, la tension v mesurée est inférieure au seuil V1 minimal et ne s'élève pas au-dessus de la valeur déterminée de seuil V2 maximal, alors le BMS 13 déclenche une phase d'équilibrage individuel de l'élément rechargeable correspondant présentant ce fort déséquilibre. Cette phase d'équilibrage individuel est activée en complément de la phase d'équilibrage simultané. Durant cette phase individuelle, le BMS 13 active le circuit 21 d'équilibrage actif en commandant une commutation du circuit 18 de commutation de sorte à connecter le convertisseur 19 audit élément 12 présentant le déséquilibre. L'énergie utilisée pour réaliser cette phase d"équilibrage actif provient du dispositif 20 d'alimentation et non pas des éléments 12 eux-mêmes, comme dans le cas de l'équilibrage simultané passif.

Ainsi avec l'invention, lorsque la tension V mesurée aux bornes d'un élément 12 est différent de la tension d'équilibrage prédéfinie alors on effectue systématiquement un équilibrage passif. Si au bout d'une durée prédéfinie, la tension V mesurée n'a toujours pas atteint la tension d'équilibre, le BMS vérifie si un des éléments 12 du pack 10 présente un fort déséquilibre de charge. Si un des éléments 12 présentent de forts déséquilibres, (par exemple v<V1), le BMS 13 exécute un équilibrage de cet élément avec un courant bien plus fort qu'en passif (par exemple le courant en équilibrage individuel est 5 à 10 fois plus important que le courant dérivé en simultané).

Le convertisseur 19 et le circuit 18 de commutation sont choisis de sorte que presque toute l'énergie délivrée par le dispositif 20 d'alimentation est exploitée pour l'équilibrage. Il y a alors peu de perte calorifique. Cette solution est donc bien adaptée, si peu de cellules sont à équilibrer de manière importante. Cet équilibrage est ainsi adapté, quel que soit le nombre de cellules mises en série dans le pack, donc quelle que soit la tension globale du pack. Le convertisseur 19 DC/DC utilisé reste inchangé, car sa caractéristique d'entrée est la même.

L'invention permet ainsi d'effectuer à la fois:
- un équilibrage simultané de l'ensemble des éléments rechargeables du pack de batteries à l'aide de composant passifs, et
- un équilibrage individuel d'un élément rechargeable en cas de forts déséquilibres de cet élément.

Le système de gestion pour batterie de l'invention est constitué de composants communs et bon marché, ce qui rend sa fabrication simple et peu coûteuse. En outre, dans la structure de cet appareil, les composants peuvent être remplacés par des composants correspondants. De même, d'autres composants peuvent être intercalés entre les composants décrits de ces dispositifs.

## Revendications

1. ― Système (13) de gestion pour batterie destiné à contrôler un pack (10) de batteries alimentant un appareil électrique, ledit pack comportant un ensemble de cellules montées en série, chaque cellule comportant au moins un élément (12) rechargeable, ladite batterie étant alimentée par une source d'alimentation,
**caractérisé en ce qu'**il comporte:
- des moyens d'activation (33) d'un circuit d'équilibrage passif par l'intermédiaire d'une mise en circuit des branches (14) de dérivation individuelles montées en parallèle de chaque élément rechargeable, lorsque la tension mesurée aux bornes d'un des éléments est différente d'une tension d'équilibrage prédéfinie,
- des moyens d'activation (35) d'un circuit d'équilibrage actif par l'intermédiaire d'une commutation d'un circuit de commutation destiné à interconnecter un des éléments rechargeables du pack à un dispositif d'alimentation (20) distinct de ladite source d'alimentation et dont l'énergie est utilisée pour réaliser un équilibrage individuel dudit élément, la cellule correspondante dudit élément rechargeable restant montée en série avec les autres cellules dudit pack de sorte que le circuit de puissance ne soit pas coupé, ledit circuit de commutation étant activé lorsque la tension aux bornes dudit élément rechargeable n'a pas atteint une valeur déterminée d'un seuil V1 minimal.

2. ― Système selon la revendication précédente, dans lequel le dispositif d'alimentation est relié au circuit de commutation par l'intermédiaire d'un convertisseur (19) continu/continu.

3. ― Système selon la revendication précédente, dans lequel le convertisseur est isolé galvaniquement de la masse de l'appareil électrique alimenté par le pack de batteries de sorte à générer une tension de sortie isolée de la tension sur son entrée.

4. ― Système selon l'une des revendications précédentes, dans lequel la branche de dérivation comporte une résistance (16) et un transistor (17) monté en série aux bornes de l'élément.

5. ― Système selon la revendication précédente, dans lequel la branche de dérivation est montée en série avec une résistance (15) de mesure de tension, ladite résistance étant connectée à une borne négative de l'élément correspondant.

6. ― Procédé d'équilibrage pour batterie électrique, selon l'une des revendications précédentes, dans lequel :
- on mesure (30) une tension aux bornes de chacun des éléments rechargeables d'un pack de batteries, ces éléments rechargeables étant montés en série,
- on compare (31) la tension mesurée à une tension d'équilibrage prédéfinie,
- lorsque la tension mesurée aux bornes d'un des éléments rechargeables est différente de la tension d'équilibrage alors on déclenche un équilibrage simultané (32) de l'ensemble des éléments du pack, en activant les branches de dérivation individuelles montées en parallèle de chaque élément rechargeable, lesdites branches de dérivation étant aptes à dériver au moins une partie du courant circulant sur lesdits éléments.
- si à l'issue d'une durée prédéfinie, la tension mesurée aux bornes dudit élément n'a pas atteint une valeur déterminée de seuil V1 minimal, alors on déclenche un équilibrage individuel actif de cet élément en activant un circuit de commutation, ledit circuit de commutation étant destiné à interconnecter ledit élément rechargeable à un dispositif d'alimentation dont l'énergie est utilisée pour réaliser l'équilibrage dudit élément, ledit élément rechargeable restant monté en série avec les autres éléments rechargeables du pack de sorte que le circuit de puissance ne soit pas coupé.
